# EUROPÄISCHE PATENTANMELDUNG

(11) **EP 4 610 100 A1**
(43) Veröffentlichungstag der Anmeldung: **03.09.2025**
(21) Anmeldenummer: 25153718.9
(22) Anmeldetag: 24.01.2025
(51) Int. Cl.: B60N 2/16, B60N 2/07, B60N 2/68

(54) **FAHRZEUGSITZ MIT RAHMENVERSCHRAUBUNG**

(30) Priorität: 01.03.2024 DE 102024106063
(71) Anmelder: GRAMMER AG, 92289 Ursensollen (DE)
(72) Erfinder: Schanderl, Florian, 92521 Schwarzenfeld (DE)
(74) Vertreter: Hannke, Christian

(57) **Zusammenfassung**

Die vorliegende Erfindung betrifft einen Fahrzeugsitz, umfassend ein Sitzteil und einen Fahrzeugsitzunterbau mit einem unteren Anteil und einem dazu höhenverstellbaren oberen Anteil, wobei der obere Anteil einen Rahmen zum Tragen des Sitzteils aufweist oder der untere Anteil einen Rahmen zur Befestigung des Fahrzeugsitzes an einer Karosserie aufweist, wobei der Rahmen ein erstes Rahmenteil und ein zweites Rahmenteil umfasst, welche durch mindestens ein Verbindungsmittel miteinander verbunden sind, wobei das mindestens eine Verbindungsmittel ein zusätzliches Bauteil am Rahmen befestigt.

## Beschreibung

Die vorliegende Erfindung betrifft einen Fahrzeugsitz, umfassend ein Sitzteil und einen Fahrzeugsitzunterbau mit einem unteren Anteil und einem dazu höhenverstellbaren oberen Anteil, wobei der obere Anteil einen Rahmen zum Tragen des Sitzteils aufweist oder der untere Anteil einen Rahmen zur Befestigung des Fahrzeugsitzes an einer Karosserie aufweist, wobei der Rahmen ein erstes Rahmenteil und ein zweites Rahmenteil umfasst, welche durch mindestens ein Verbindungsmittel miteinander verbunden sind, wobei das mindestens eine Verbindungsmittel ein zusätzliches Bauteil am Rahmen befestigt.

In Kraftfahrzeugen, insbesondere in Nutzfahrzeugen, wie Traktoren oder LKW, sind die Fahrzeugsitze aufgrund der intensiven Nutzung auf höchsten Komfort ausgelegt. Dazu weisen solche Fahrzeugsitze im Gegensatz zu Sitzen für PKWs, zusätzlich zur Fahrzeugfederung eine Federung im Fahrzeugsitzunterbau auf. Eine Federbewegung oder eine generelle Höhenverstellbarkeit wird dabei durch ein Scherengestell ermöglicht, das zwischen zwei Rahmen angeordnet ist. Üblicherweise ist der untere Rahmen an der Karosserie des Fahrzeugs befestigt wohingegen der obere Rahmen eine Befestigungen für mindestens eine Verstellschiene aufweist. Diese Verstellschienen ermöglichen eine Sitzverstellung entlang der Fahrtrichtung. Bislang werden solche Befestigungen seitlich mit dem Rahmen verschweißt oder seitlich an den Rahmen angeschraubt. Durch diese seitliche Anordnung ergeben sich bei einer Belastung durch den Sitzaufbau bzw. durch einen Insassen Kräfte auf die Befestigungen, die unvorteilhafter Weise über die seitlichen Befestigungen an den Rahmen und das Schergestell abgeführt werden müssen. Zudem erfordert die Montage der Befestigungen einen zusätzlichen Arbeitsschritt.

Es ist daher Aufgabe der Erfindung einen Fahrzeugsitz zur Verfügung zu stellen, der die genannten Nachteile des Standes der Technik behebt und den Fahrzeugsitz hinsichtlich Mechanik, Fertigung und Konstruktion verbessert.

Diese Aufgabe wird gelöst durch einen Fahrzeugsitz umfassend ein Sitzteil und einen Fahrzeugsitzunterbau mit einem unteren Anteil und einem dazu höhenverstellbaren oberen Anteil, wobei der obere Anteil einen Rahmen zum Tragen des Sitzteils aufweist oder der untere Anteil einen Rahmen zur Befestigung des Fahrzeugsitzes an einer Karosserie aufweist, wobei der Rahmen ein erstes Rahmenteil und ein zweites Rahmenteil umfasst, welche durch mindestens ein Verbindungsmittel miteinander verbunden sind, wobei das mindestens eine Verbindungsmittel ein zusätzliches Bauteil am Rahmen befestigt.

Das Sitzteil kann, wie bei Fahrzeugsitzen üblich, neben einem Sitzkissen auch eine Rückenlehne und eine Kopfstütze aufweisen. Zusätzlich kann das Sitzteil auch eine Armlehne umfassen. Eine Rückenlehne kann sich dabei in einer Höhenrichtung Z des Sitzes erstrecken und ein Sitzkissen in einer Ebene erstrecken, die durch eine Längsrichtung X des Sitzes und eine Breitenrichtung Y des Sitzes aufgespannt wird. Höhenrichtung Z, Längsrichtung X und Breitenrichtung Y bilden dabei ein kartesisches Koordinatensystem. Üblicherweise sind Sitzkissen und Rückenlehne um eine Rotationsachse, parallel zur Breitenrichtung Y des Sitzes, drehbar angeordnet, müssen also nicht immer entlang X, Y oder Z angeordnet sein.

Der Fahrzeugsitzunterbau ermöglicht erfindungsgemäß eine Höhenverstellbarkeit des Sitzteils gegenüber der Karosserie des Fahrzeuges. Dazu umfasst der Fahrzeugsitzunterbau einen unteren Anteil, der an der Karosserie befestigt ist, sowie einen oberen Anteil, der das Sitzteil trägt. Vorzugsweise sind der oberer Anteil und der unterer Anteil höhenverstellbar miteinander verbunden.

Nach einer bevorzugten Ausführungsform sind der obere und der untere Anteil durch ein Scherengestell miteinander verbunden. Üblicherweise umfasst das Scherengestell mindestens einen ersten und einen zweiten Scherenarm, wobei beide Scherenarme drehbar um eine gemeinsame Drehachse miteinander verbunden sind. Vorzugsweise ist der erste Scherenarm über ein Festlager mit dem unteren Anteil verbunden und über ein Loslager mit dem oberen Anteil verbunden und der zweite Scherenarm über ein Festlager mit dem oberen Anteil verbunden und über ein Loslager mit dem unteren Anteil verbunden. Alternativ können beide Scherenarme mit dem oberen Anteil über jeweils ein Festlager verbunden sein und mit dem unteren Anteil über jeweils ein Loslager verbunden sein oder weiterhin alternativ mit dem unteren Anteil über jeweils ein Festlager verbunden sein und mit dem oberen Anteil über jeweils ein Loslager verbunden sein.

Vorzugsweise umfasst das Scherengestell ein Federelement. Das Federelement kann dabei mit dem ersten und dem zweiten Scherenarm verbunden sein. Alternativ kann das Federelement mit einem der Scherenarme und dem oberen oder dem unteren Anteil verbunden sein. Weiterhin alternativ kann das Federelement mit dem oberen und dem unteren Anteil verbunden sein. Das Federelement kann dabei eine Bewegung zwischen oberen und unterem Anteil dämpfen. Bei einem derartigen Federelement kann es sich beispielsweise um eine Luftfeder handeln, wobei über einen Innendruck oder einen Außendruck die Federhärte verändert werden kann.

Nach einer weiteren Ausführungsform sind der obere und der untere Anteil über ein Federelement höhenverstellbar miteinander verbunden. Alternativ können oberer und unterer Anteil über eine Spindel, eine Zahnstange oder eine Teleskopstange höhenverstellbar miteinander verbunden sein.

Erfindungsgemäß weisen der obere oder der untere Anteil einen Rahmen auf. Der Rahmen des oberen Anteils trägt dabei das Sitzteil und verbindet somit den Fahrzeugsitzunterbau mit dem Sitzteil. Der Rahmen des unteren Anteils wird an der Karosserie befestigt und verbindet somit den Fahrzeugsitzunterbau mit der Karosserie.

Da es sehr aufwendig wäre einen Rahmen einteilig auszubilden, umfasst der Rahmen erfindungsgemäß ein erstes und ein zweites Rahmenteil. Da der Rahmen jedoch hohen Anforderungen an Festigkeit und Steifigkeit durch seinen Einsatz als tragendes Teil in einem Fahrzeugsitz, insbesondere eines Nutzfahrzeuges, erfüllen muss, ist es notwendig, das erste und das zweite Rahmenteil entsprechend den Anforderungen miteinander zu verbinden. Dazu ist erfindungsgemäß mindestens ein Verbindungsmittel vorgesehen.

Gemäß einer besonders bevorzugten Ausführungsform besteht der Rahmen aus mindestens vier Rahmenteilen, welche rechteckförmig angeordnet sind, wobei der Rahmen in seiner Haupterstreckungsebene senkrecht zu einer Höhenrichtung Z des Sitzes angeordnet ist.

Nach einer bevorzugten Ausführungsform werden die vier Seiten des Rechtecks durch die vier Rahmenteile gebildet. Vorteilhafterweise sind dann jeweils mindestens zwei Rahmenteile gleich lang.

In einem Normalzustand verläuft die Höhenrichtung Z des Sitzes parallel zu Gewichtskraft Fg. Damit der Rahmen durch eine Belastung, beispielsweise durch das Sitzteil, das er trägt, nicht einseitig belastet wird, ist der Rahmen in seiner Haupterstreckungsebene, also der Ebene, die durch die Seiten des Rahmens aufgespannt wird, senkrecht zur Höhenrichtung Z des Sitzes angeordnet.

Gemäß einer besonders bevorzugten Ausführungsform weist der Rahmen zwei parallel zueinander angeordnete Hauptstreben mit je einem Mittelsteg, einem oberen Steg und einem unteren Steg auf, wobei der Mittelsteg zwischen oberen und untere Steg angeordnet ist und die Hauptstreben in einem Schnitt senkrecht zu ihrer Haupterstreckungsachse U-förmig oder Doppel-T-förmig sind, wobei sich mindestens zwei Öffnungen in jedem der beiden im Schnitt U-förmigen oder Doppel-T-förmigen Hauptstreben in ihren Endbereichen gegenüberliegen und der Rahmen mindestens zwei Querstreben aufweist, welche die beiden Hauptstreben jeweils an den Endbereichen ihrer Haupterstreckungsachse miteinander verbinden, wobei die Hauptstreben zum Führen mindestens eines Verschiebeelements, wie einer Rolle, einem Gleiter oder einem Schlitten, ausgebildet sind.

Aus gewichtstechnischen und kostentechnischen Gründen ist es unvorteilhaft, die Rahmenteile aus Vollmaterial zu bilden. Vielmehr hat sich bei Rahmenkonstruktionen der Einsatz von Hohlrohren bewährt, welche bei wesentlich geringerem Materialeinsatz ähnliche mechanische Eigenschaften hinlänglich Biege-, Zug-, Druck- und Torsionssteifigkeit bieten. Ebenfalls gute mechanische Eigenschaften bieten Steben, die in einem Schnitt senkrecht zu ihrer Haupterstreckungsachse ein U-förmiges oder Doppel-T-förmiges Schnittbild zeigen. Solche Streben weisen einen Mittelsteg sowie einen oberen und einen unteren Steg auf. Dabei steht der mittlere Steg mit dem oberen und dem unteren Steg in einer stoffschlüssigen Verbindung oder ist aus einem Teil geformt oder einteilig hergestellt. Der obere und der untere Steg hingegen sind nicht miteinander verbunden. Vorzugsweise sind oberer und unterer Steg parallel zueinander angeordnet und der mittlere Steg senkrecht dazu. Entsprechend ihres Schnittbildes werden diese Streben auch als U-Profile oder Doppel-T-Profile bzw. Doppel-T-Träger bezeichnet.

Nach einer weiteren Ausführungsform können die obigen Hauptstreben als Vierkantrohre oder Rundrohre ausgebildet sein, wobei diese jeweils mindestens eine Öffnung an den Endbereichen ihrer Haupterstreckungsachse aufweisen.

Gemäß einer bevorzugten Ausführungsform sind die beiden parallelen Hauptstreben in ihrer Haupterstreckungsachse parallel zur Längsrichtung X des Sitzes angeordnet und die beiden Querstreben in ihrer Haupterstreckungsachse parallel zur Breitenrichtung Y des Sitzes angeordnet. Vorzugsweise sind die Querstreben die Hauptstreben jeweils in einem Endbereich ihrer jeweiligen der Haupterstreckungsachse miteinander verbunden. Alternativ oder zusätzlich kann mindestens eine Querstrebe die beiden Hauptstreben in einem Mittelbereich ihrer Haupterstreckungsachse verbinden.

Vorzugsweise dienen die Öffnungen in den Hauptstreben der Aufnahme eines Verschiebeelements eines Scherenarmes und/oder einer Befestigung eines Scherenarms. Alternativ oder zusätzlich dienen die Öffnungen der Aufnahme einer Befestigung eines Federelementes.

Vorzugsweise sind der obere und der untere Steg in ihrer Haupterstreckungsebene senkrecht zur Höhenachse Z des Sitzes angeordnet. Bevorzugt weist der obere und/oder der untere Steg eine Lauffläche für mindestens ein Verschiebeelement auf. Das mindestens eine Verschiebeelement kann sich dann entlang einer Haupterstreckungsachse des Steges bewegen. Alternativ ist auch denkbar, dass der mittlere Steg eine Lauffläche für mindestens ein Verschiebeelement aufweist. Das mindestens eine Verschiebeelement ist vorzugsweise eine Rolle. Ebenfalls denkbar wäre auch ein Gleiter oder ein Schlitten oder eine Kombination der genannten. Es kann auch eine zusätzliche Schiene an der Hauptstrebe angebracht sein, die zum Führen mindestens eines Verschiebeelementes ausgebildet ist.

Vorzugsweise bildet die Hauptstrebe eines der erstes oder zweites Rahmenteil, wobei die Querstrebe das andere der beiden bildet.

Gemäß einer bevorzugten Ausführungsform weist der Rahmen in den vier Endbereichen der Hauptstreben jeweils ein Verbindungsmittel auf. Weiterhin bevorzugt weist der Rahmen zwischen den Endbereichen je Hauptstrebe mindestens ein weiteres Verbindungsmittel auf. Somit weist der Rahmen bevorzugt insgesamt mindestens sechs, weiterhin bevorzugt mindestens acht Verbindungsmittel auf. Weiterhin bevorzugt sind die Verbindungsmittel in zwei Viererreihen jeweils parallel zur Längsrichtung X angeordnet.

Gemäß einer besonders bevorzugten Ausführungsform umfasst das Verbindungsmittel mindestens eine Schraubverbindung, wobei der Rahmen mindestens eine Durchführung aufweist, die durch zwei der Rahmenteile hindurchgeht, wobei die Durchführung parallel zur Höhenrichtung Z des Sitzes verläuft und die mindestens eine Schraubverbindung innerhalb der Durchführung angeordnet ist, welche die beiden Rahmenteile kraftschlüssig miteinander verbindet.

Vorzugsweise verbindet mindestens ein Verbindungsmittel ein erstes Rahmenteil, ein zweites Rahmenteil und ein zusätzliches Bauteil kraftschlüssig. Ebenfalls wäre jedoch denkbar, dass die Verbindung form- oder stoffschlüssig oder eine Kombination der drei Verbindungen ist. Auch können zwei der drei oben genannten Teile mit einer Verbindungsart verbunden sein und das letzte der Bauteile mit einer anderen Verbindungsart daran befestigt sein. Beispielsweise sind die beiden Rahmenteile mit einer kraftschlüssigen Verbindung verbunden und das zusätzliche Bauteil stoffschlüssig mit dem Verbindungsmittel verbunden.

Bevorzugt weisen zwei Rahmenteile oder eine Hauptstrebe und eine Querstrebe eine Durchführung auf, in der eine Schraubverbindung angeordnet ist. Dazu kann mindestens eines der beiden Rahmenteile oder Hauptstrebe oder Querstrebe ein Innengewinde aufweisen, in das eine Schraube eingeschraubt wird. Alternativ oder zusätzlich kann das zusätzliche Bauteil ein Innengewinde aufweisen, in das eine Schraube eingeschraubt wird. Vorzugsweise verläuft die Durchführung parallel zur Höhenrichtung Z des Sitzes. Bevorzugt verläuft die Durchführung durch eine Haupt- und eine Querstrebe. Weiterhin bevorzugt verläuft die Durchführung zudem durch das zusätzliche Bauteil. Nach einer Ausführungsform weist die Durchführung überall die gleiche Form und den gleichen Durchmesser auf. Vorzugsweise ist die Form ein Zylinder, der sich in seiner Haupterstreckung entlang der Höhenrichtung Z des Sitzes erstreckt. Denkbar wäre auch, dass die Form zwei unterschiedliche Durchmesser und/oder zwei unterschiedliche Formen aufweist.

Bevorzugt sind das erste und das zweite Rahmenteil in einem Schnitt senkrecht zu ihrer Haupterstreckungsachse U-förmig, wobei das zweite Rahmenteil eine geringere Höhe in Höhenrichtung Z aufweist als das erste Rahmenteil. Weiterhin bevorzugt ist das zweite Rahmenteil mit der geringeren Höhe als das erste Rahmenteil in einem Endbereich in einen Endbereich des ersten Rahmenteils eingeführt, wobei das erste Rahmenteil das zweite Rahmenteil zumindest teilweise umschließt. Bevorzugt ist die Durchführung in dem Endbereich angeordnet, in dem das erste Rahmenteil das zweite Rahmenteil zumindest teilweise umschließt, wobei die Durchführung in Höhenrichtung Z von den Rahmenteilen vollständig radial umschlossen ist. Vorzugsweise ist die Hauptstrebe in die Querstrebe eingeführt.

Gemäß einer besonders bevorzugten Ausführungsform ist parallel zur Höhenrichtung Z des Sitzes mindestens eine Buchse in die Durchführung eingeführt, wobei die Buchse an einem ersten Ende einen Kragen aufweist, der größer als der Durchmesser der Durchführung ist und die Buchse ein Innengewinde aufweist, in das von dem, dem Kragen gegenüberliegenden, zweiten Ende aus eine erste Schraube eingreift, wobei die erste Schraube und die Buchse mindestens zwei Rahmenteile kraftschlüssig miteinander verbindet.

Vorzugsweise weist die Buchse die Form der Durchführung und einen kleineren Durchmesser als die Durchführung auf. Es ist jedoch auch denkbar, dass die Buchse eine andere Form als die Durchführung aufweist. Bevorzugt ist die Buchse hohlzylindrisch ausgebildet und weist parallel zu ihrer Haupterstreckungsachse eine Innenfläche mit einem Innengewinde und senkrecht zu ihrer Haupterstreckungsachse einen Kragen auf, wobei der Kragen einem größeren Durchmesser hat als die Durchführung in einem der Rahmenteile. Durch diesen Kragen kann ein Durchrutschen der Buchse durch die Durchführung verhindert werden und in Kombination mit einer Schraube können die beiden Rahmenteile kraftschlüssig verbunden werden. Bevorzugt weist die Außenfläche der Buchse kein Gewinde auf. Die Buchse kann, da sie der Aufnahme mindestens einer Schraube dient, auch als Mutter bezeichnet werden. Nach einer Ausführungsform erstreckt sich das Innengewinde über die gesamte Länge der Buchse. Alternativ kann das Innengewinde abschnittsweise an der Innenfläche der Buchse angeordnet sein, wobei die Buchse mindestens zwei Abschnitte mit Innengewinde und einen Abschnitt ohne Innengewinde aufweist.

Vorzugsweise weist die erste Schraube einen Schraubenschaft mit einem Außengewinde und einen Schraubenkopf auf. Weiterhin bevorzugt ist der Durchmesser des Schraubenkopfes größer als die Durchführung, die gegenüber dem Kragen der Buchse liegt. Zusätzlich oder alternativ kann zwischen der ersten Schraube und der Durchführung eine Beilagscheibe angeordnet sein, die einen größeren Durchmesser als die Durchführung aufweist, wobei diese gegenüber dem Kragen der Buchse liegt. Zusätzlich oder alternativ kann auch zwischen der Buchse und der Durchführung eine Beilagscheibe, mit einem Durchmesser größer als die Durchführung, die gegenüber dem Kopf der ersten Schraube liegt, angeordnet sein.

Vorzugsweise sind das erste und das zweite Rahmenteil oder die Haupt- und Querstrebe miteinander kraftschlüssig und formschlüssig verbunden, wobei der Formschluss durch den Kragen der Buchse und den Kopf der Schraube gebildet wird. Dabei sind die Schraube und die Buchse kraftschlüssig miteinander verbunden.

Alternativ kann die erste Schraube auch ohne Kopf ausgebildet sein und der Formschluss und/oder der Kraftschluss durch eine Mutter gebildet werden, die auf die Schraube von der Seite aufgeschraubt wird, die nicht in die Buchse eingeschraubt ist.

Gemäß einer Ausführungsform weist die Buchse ein Außengewinde auf. Dabei ist die Buchse länger als die Durchführung durch das erste und das zweite Rahmenteil. Das Außengewinde ist dann an dem Ende der Buchse angeordnet, das dem Kragen gegenüberliegt. Auf das Ende, welches das Außengewinde aufweist, und das, wenn die Buchse in der Durchführung angeordnet ist, über ein Ende der Durchführung hervorsteht, ist eine Mutter mit einem Durchmesser größer als der Durchmesser der Durchführung aufgeschraubt. Durch die Mutter und die Buchse, die in diesem Fall als Gewindeeinsatz bezeichnet werden kann, sind die beiden Rahmenteile kraftschlüssig verbunden.

Gemäß einer besonders bevorzugten Ausführungsform ist die mindestens eine Durchführung ein Langloch.

Durch ein Langlonch kann die Buchse mit einem gewissen, durch die Ausdehnung des Langlochs gegebenen, Spiel angeordnet werden, wodurch Bauteiltoleranzen der Hauptstreben und Querstreben ausgeglichen werden können.

Gemäß einer besonders bevorzugten Ausführungsform ist das zusätzliche Bauteil mittels einer zweiten Schraube von dem ersten Ende aus, das den Kragen aufweist, mit der Buchse verschraubt.

Vorzugsweise ist der Kragen der Buchse, in Höhenrichtung Z betrachtet, bei einem oberen Anteil des Fahrzeugsitzunterbaus über dem Rahmen und bei einem unteren Anteil unter dem Rahmen angeordnet.

Gemäß einer bevorzugten Ausführungsform dringt die erste Schraube zu mindestens einem Drittel und zu höchstens zwei Drittel der Gesamtlänge der Buchse in die Buchse ein. Vorzugsweise ist die zweite Schraube in die Buchse von der Seite eingeschraubt, die nicht durch die erste Schraube belegt ist. Die zweite Schraube kann zu mindestens einem Viertel und zu höchstens einem Drittel der Gesamtlänge der Buchse in die Buchse eingeschraubt sein. Bevorzugt weist die zweite Schraube einen Schraubenschaft und einen Schraubenkopf auf. Besonders bevorzugt weist das zusätzliche Bauteil eine Durchführung auf, die größer als der Durchmesser der zweiten Schraube ist. Vorzugsweise ist die zweite Schraube durch die Durchführung des zusätzlichen Bauteils durchgeführt und in die Buchse eingeschraubt. Der Schraubenkopf bildet dabei einen Formschluss zwischen dem zusätzlichen Bauteil und der zweiten Schraube. Alternativ oder zusätzlich kann eine Beilagscheibe und/oder eine Mutter den Formschluss zwischen der zweiten Schraube und dem zusätzlichem Bauteil bilden. Ebenso kann das zusätzliche Bauteil ein Gewinde aufweisen, wobei das zusätzliche Bauteil und die zweite Schraube kraftschlüssig miteinander verbunden sind.

Vorzugsweise liegt das zusätzliche Bauteil teilweise, besonders bevorzugt vollständig, auf dem Kragen der Buchse auf. Es kann auch sein, dass der Kragen der Buchse teilweise, bevorzugt vollständig, auf dem Bauteil aufliegt. Natürlich ist auch denkbar, dass das zusätzliche Bauteil über mehrere Schraubverbindungen mit mehreren Buchsen verbunden ist. In so einem Fall liegt das zusätzliche Bauteil bevorzugt auf allen Krägen der Buchsen teilweise, besonders bevorzugt auf allen Krägen der Buchsen vollständig, auf.

Gemäß einer bevorzugten Ausführungsform umfasst das mindestens eine Verbindungsmittel eine erste Schraube, eine zweite Schraube und eine Mutter. Vorzugsweise sind sowohl die erste Schraube als auch die zweite Schraube mit der Mutter kraftschlüssig verbunden. Weiterhin vorzugsweise verbinden die erste Schraube und die Mutter das erste und das zweite Rahmenteil kraftschlüssig und die zweite Schraube und die Mutter verbinden mindestens eines der beiden Rahmenteile und das zusätzliche Bauteil miteinander kraftschlüssig.

Gemäß einer besonders bevorzugten Ausführungsform beabstandet mindestens ein Abstandshalter den oberen und den unteren Steg. Der Abstandshalter begrenzt die mindestens eine Durchführung zumindest teilweise umfangseitig.

Durch den Abstandshalter wird verhindert, dass sich der durchschnittliche Abstand zwischen oberen und unteren Steg durch eine Krafteinwirkung auf mindestens einen der Stege durch eine, zwischen den Stegen angeordnete, Schraubverbindung verringert. Vorzugsweise ist der Abstandshalter als hohlzylindrische Hülse ausgeformt, wobei ihre Höhe dem Abstand zwischen der oberen und der unteren Strebe entspricht. Diese Hülse ist so innerhalb der Hauptstrebe oder dem Rahmenteil angeordnet, dass sie die Durchführung mindestens teilweise umschließt, wobei in die Hülse oder den Abstandshalter die Buchse eingeführt wird.

Gemäß einer besonders bevorzugten Ausführungsform stellt der mindestens eine Abstandshalter einen Teil der Querstrebe dar.

Dadurch, dass der mindestens eine Abstandshalter einen Teil der Querstrebe darstellt, wird sichergestellt, dass der Abstandshalter fest an seinem Platz verbleibt und nicht verrutschen kann. Zudem muss bei der Montage keine besondere Rücksicht auf die Ausrichtung des Abstandshalters genommen werden. Dazu kann ein Teil der Querstrebe halbkreisförmig, bevorzugt kreisförmig umgeformt oder geformt sein. Dieser halbkreis- oder kreisförmige Teil entspricht dann der zuvor genannten Hülse. Besonders bevorzugt ist der Abstandshalter rechteckförmig mit einer offenen Seite ausgeformt.

Gemäß einer besonders bevorzugten Ausführungsform ist das zusätzliche Bauteil mindestens eine Befestigung für eine oberhalb des Rahmens angeordnete Sitzschale.

Gemäß einer besonders bevorzugten Ausführungsform ist das zusätzliche Bauteil mindestens eine oberhalb oder unterhalb des Rahmens angeordnete Sitzschiene oder ein Schlitten.

Nach einer bevorzugten Ausführungsform ist das zusätzliche Bauteil eine Drehachse, wobei das Sitzteil um die Drehachse drehbar angeordnet ist. Weiter bevorzugt ist das zusätzliche Bauteil die Karosserie eines Fahrzeuges oder eine Montageplatte, die an der Karosserie angeordnet ist. Vorzugsweise ist das zusätzliche Bauteil ein Ständer oder ein Balken einer Wippe, wobei das Sitzteil gegenüber dem Fahrzeugsitzunterbau um eine Kippachse parallel zur Breitenrichtung Y des Fahrzeugsitzes rotierbar ist.

Vorzugsweise trägt das zusätzliche Bauteil das Sitzteil.

Gemäß einer besonders bevorzugten Ausführungsform befestigt das Verbindungsmittel zugleich das zusätzliche Bauteil und verbindet die Rahmenteile kraftschlüssig.

Weitere Ziele, Vorteile und Zweckmäßigkeiten der vorliegenden Erfindung sind der nachfolgenden Beschreibung in Verbindung mit der Zeichnung zu entnehmen. Hierbei zeigen:
- Fig. 1: eine isometrische Ansicht eines Fahrzeugsitzunterbaus aus dem Stand der Technik;
- Fig. 2: eine Gesamtansicht eines erfindungsgemäßen Fahrzeugsitzes;
- Fig. 3: eine isometrische Ansicht des erfindungsgemäßen Fahrzeugsitzunterbaus;
- Fig. 4: eine isometrische Ansicht des Rahmen
- Fig. 5a: ein Teil eines Schnittes durch den Rahmen entlang einer Y-Z Ebene;
- Fig. 5b: ein Teil eines Schnittes durch den Rahmen entlang einer Y-Z Ebene mit zusätzlichem Bauteil;
- Fig. 6: eine isometrische Ansicht einer Querstrebe;
- Fig. 7: einen Schnitt durch den erfindungsgemäßen Fahrzeugsitzunterbau entlang einer X-Z Ebene.

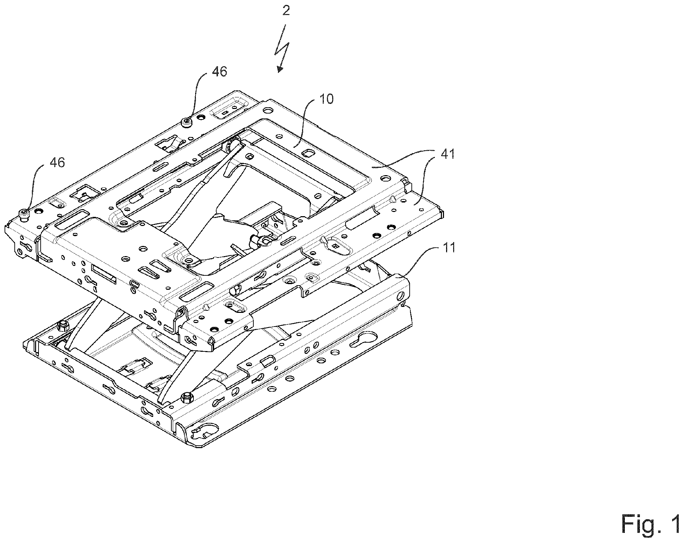

Die Figur 1 zeigt eine Fahrzeugsitzunterbau 2 aus dem Stand der Technik. Der Fahrzeugsitzunterbau 2 hat einen oberen Anteil 10 mit einem oberen Rahmen 16 und einen unteren Anteil 11 mit einem unteren Rahmen 17. Auf dem oberen Rahmen 16 ist ein Tragebauteil 47 angeschweißt. Befestigungsschrauben 46 für eine Verstellschiene 8 sind neben dem oberen Rahmen 16 im Tragebauteil 47 angeordnet.

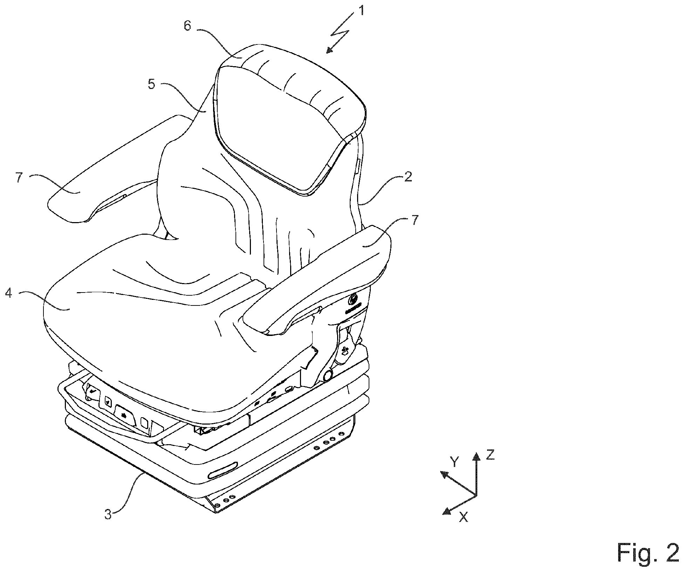

Die Figur 2 zeigt einen erfindungsgemäßen Fahrzeugsitz 1. X ist die Längsrichtung des Sitzes, Y seine Breitenrichtung und Z seine Höhenrichtung. Der Fahrzeugsitz umfasst ein Sitzteil 2 und einen, in Höhenrichtung Z, darunter angeordneten Fahrzeugsitzunterbau 3, der das Sitzteil 2 trägt. Das Sitzteil 2 umfasst neben einem sich parallel zu einer X-Y Ebene ersteckenden Sitzkissen 4, ein sich in Höhenrichtung Z erstreckendes Rückenteil 5 mit einer anschließenden Kopfstütze 6 und zwei, seitlich neben der Rückenlehne angebrachte und parallel zum Sitzkissen erstreckende Armlehnen 7. Zur Anpassung des Sitzes sind mehrere Bedienelemente vorgesehen, die eine Sitzhöhenverstellung, eine Sitzlängsverstellung, eine Sitzkissentiefen- und -neigungseinstellung, einer Rückenlehnenneigungseinstellung, einer Rückenverlängerung, einer Einstellung einer Lordosenstütze und eine Höhen- und Neigungseinstellung der Armlehnen. Durch diese Einstellungen können die Orientierung und/oder die Position fast aller der oben genannten Teile im Raum verändert werden. Zur Verstellung des Sitzteils 2 in Längsrichtung X sind Verstellschienen 8 auf dem Fahrzeugsitzunterbau 3 montiert.

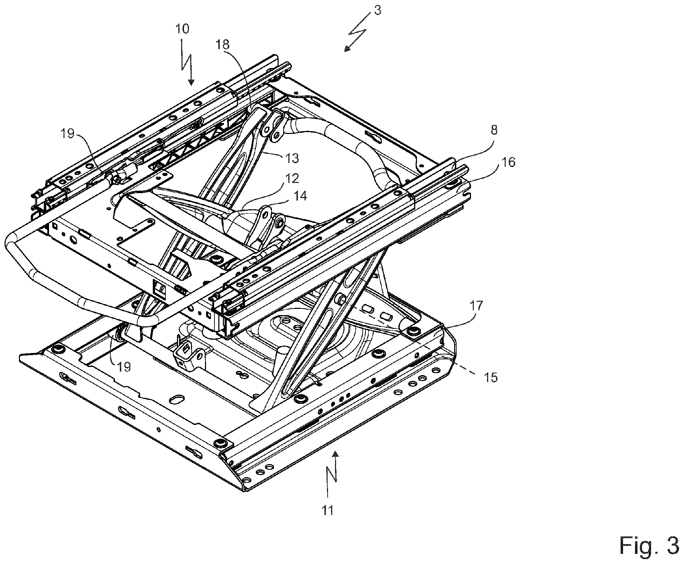

Die Figur 3 zeigt den Fahrzeugsitzunterbau 3. Der Fahrzeugsitzunterbau 3 ist in einen oberen Anteil 10 und einen unteren Anteil 11 aufgeteilt. Zwischen dem oberen und dem unteren Anteil 10, 11 ist ein Scherengestell 12 angeordnet. Das Scherengestell besteht aus zwei Scherenarmen 13, 14. Der erste Scherenarm 13 und der zweite Scherenarm 14 sind im Querschnitt rechteckförmig ausgebildet, wobei der zweite Scherenarm 14 eine geringer Breite als der erste Scherenarm 13 aufweist. Der erste Scherenarm 13 und der zweite Scherenarm 14 sind dabei kreuzförmig angeordnet, wobei der zweite Scherenarm 14 innerhalb des ersten Scherenarms angeordnet ist. Parallel zur Breitenrichtung Y sind die Scherenarme 13, 14 entlang ihrer Breite um eine Drehachse 15 drehbar miteinander verbunden. Der obere Anteil 10 weist zudem einen oberen Rahmen 16 zur Verbindung des oberen Anteils 10 mit dem Scherengestell 12 auf und der untere Anteil 11 weist einen unteren Rahmen 17 zur Verbindung des unteren Anteils 11 mit dem Scherengestell 12 auf. Der erste Scherenarm 13 ist mit dem oberen Rahmen 16 über ein Festlager 18 und mit dem unteren Rahmen 17 über ein Loslager 19 verbunden. Der zweite Scherenarm 14 ist mit dem oberen Rahmen 16 über ein Loslager 19 und mit dem unteren Rahmen 17 über ein Festlager verbunden. Um eine Distanz zwischen oberem und unterem Rahmen 16,17 einstellen zu können ist zwischen dem ersten Scherenarm und unterem Rahmen 17 eine Luftfeder (hier nicht gezeigt) angeordnet.

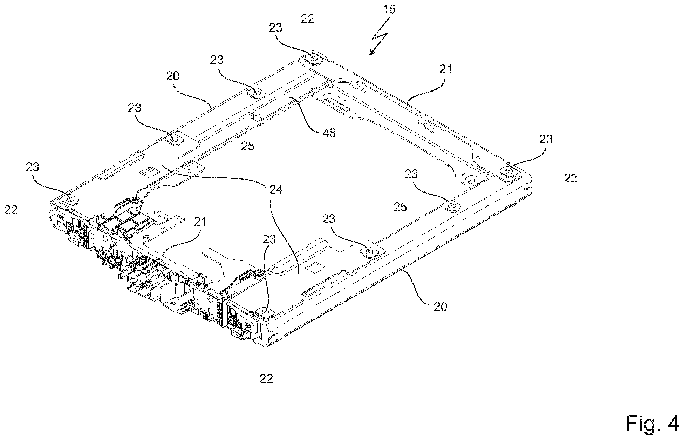

Figur 4 zeigt den oberen Rahmen 16. Der obere Rahmen 16 weist zwei parallel zueinander in Längsrichtung X verlaufende Hauptstreben 20 auf. Senkrecht dazu sind zwei in Breitenrichtung Y verlaufende Querstreben 21 angeordnet. Die Hauptstreben 20 sind an beiden Endbereichen 22 ihrer Haupterstreckungsachse mit den Querstreben 21 verbunden. Die Verbindung wird dabei durch insgesamt vier Verbindungsmittel 23 hergestellt. Hauptstreben 20 und Querstreben 21 sind dabei rechteckförmig angeordnet. Um die Rechteckform zu stabilisieren, weist die vordere der Querstreben 21 eine Ausformung 24 auf, die sich entlang der Haupterstreckungsachse der Hauptstreben 20 erstreckt. Die Ausformung 24 ist jeweils mit einer der Hauptstreben 20 in einem Mittelbereich 25 durch jeweils ein Verbindungsmittel 23 verbunden. Zusätzlich weist jede Hauptstrebe 20 ein weiteres Verbindungsmittel 23 in ihrem Mittelbereich auf, ohne dass diese Verbindungsmittel 23 die Hauptstrebe 20 mit einer Querstrebe 21 verbindet.

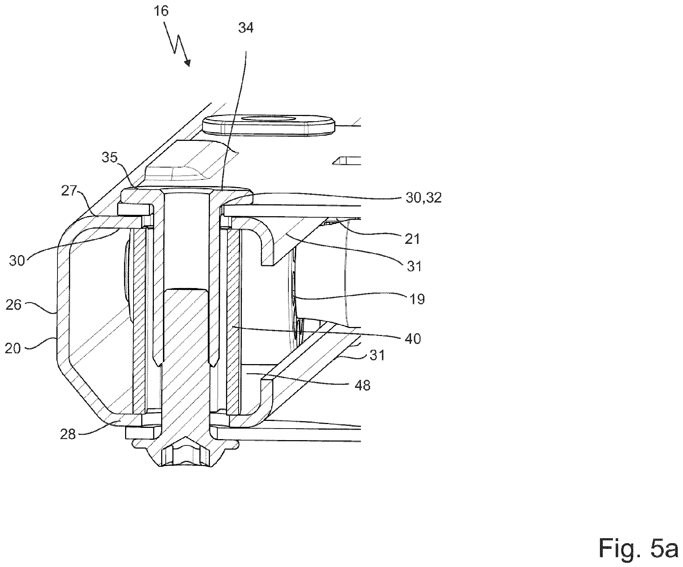

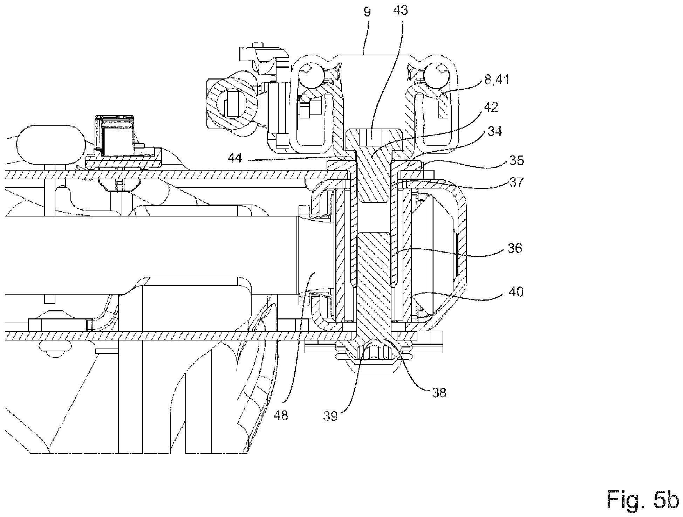

Die Figuren 5a und 5b zeigt einen Schnitt durch ein Verbindungselement des oberen Rahmens 16 entlang einer Y-Z Schnittebene. Die Hauptstrebe 20 zeigt in dieser Schnittdarstellung eine U-Form mit einem Mittelsteg 26, der eine Außenseite des oberen Rahmens 16 bildet, einem oberen Steg 27, der eine Oberseite des oberen Rahmens 16 bildet und einem unteren Steg 28, der eine Unterseite des oberen Rahmens 16 bildet. Innerhalb des Raumes der Hauptstrebe 20, der durch die Stege 26, 27, 28 und eine Begrenzung 31 eingeschlossen wird, ist ein Verschiebeelement 29 in Form einer Rolle 29 angeordnet. Die Unterseite des oberen Steges 27 bildet dabei eine Lauffläche 30 für die Rolle 29, auf der sie in Längsrichtung X laufen kann, wobei ein Herausspringen der Rolle 29 aus der Lauffläche 30 durch die Begrenzung 31 verhindert wird. Die Rolle 29 und die Hauptstrebe 20 bilden ein Loslager 19 eines Scherenarms 13, 14. Die Querstrebe 21 umschließt die Hauptstrebe 20 teilweise, ist also teilweise oberhalb und teilweise unterhalb der Hauptstrebe 20 angeordnet. Durch beide Streben 20, 21 verläuft eine Durchführung 32 in Form eines Langloches 33, das aus den Streben 20, 21 ausgestanzt wurde. In das Langloch 33 wurde von oben eine Buchse 34 in Form einer Gewindebuchse 34 eingebracht. Die Gewindebuchse 34 hat einen als Flansch ausgeformten Kragen 35, der ein Durchrutschen der Gewindebuchse 34 durch das Langloch 33 verhindert. Die Gewindebuchse 34 besitzt zudem nur etwa zwei Drittel der Länge des Langloches 33, kann somit in das Langloch 33 eingeführt, aber nicht hindurchgesteckt werden. Zudem weist die Gewindebuchse 34 ein durchgängiges Innengewinde auf, dass in ein erstes Innengewinde 36 und ein zweites Innengewinde 37 unterteilt werden kann, wobei das erste Innengewinde 36 ein unteres Ende der Gewindebuchse 34 und das zweite Innengewinde 37 ein oberes Ende der Gewindebuchse 34 abdeckt. Von der Unterseite des oberen Rahmens 16 aus ist eine erste Schraube 38 in das erste Innengewinde 36 eingeschraubt. Die erste Schraube 38 weist zudem einen ersten Schraubenkopf 39 auf, der einen größeren Durchmesser als das Langloch 33 hat, wodurch ein Durchrutschen der ersten Schraube 38 durch das Langloch 33 verhindert wird.

Bei einem Anziehen der ersten Schraube 38 gegenüber der Gewindebuchse 34 drücken der Kragen 35 von oben und der erste Schraubenkopf 39 von unten gegen die Querstrebe 21, wodurch diese entlang der Höhenrichtung Z komprimiert wird. Wenn die Querstrebe 21 weiter komprimiert wird, kontaktiert sie die Hauptstrebe 20 und komprimiert auch diese. Um Hauptstrebe 20 und Querstrebe 21 ohne übermäßige Verformung ausreichend kraftschlüssig verbinden zu können, ein Teil der Querstrebe als Abstandhalter 40 ausgeformt. Der Abstandshalter 40 umschließt die Form des Langloches 33 und bildet einen Anschlag gegenüber der sich zusammenziehenden erste Schraube 38 und der Gewindebuchse 34. Auf dem Kragen 35 liegt ein zusätzliches Bauteil 41 in Form einer Verstellschiene 8 auf. Die Verstellschiene 8 kontaktiert den Rahmen also nicht, sondern nur die Krägen 35 der Gewindebuchsen 34, mit denen die Verstellschiene 8 am oberen Rahmen 16 befestig ist. Zur Befestigung der Verstellschiene 8 mit der Gewindebuchse 34 wird eine zweite Schraube 42 mit einem zweiten Schraubenkopf 43 von oben durch eine ausgestanzte zweite Durchführung 44 der Verstellschiene in die Gewindebuchse 34 eingeführt und mit dem zweiten Innengewinde 37 verschraubt. Somit wird die Verstellschiene 8 mit der Gewindebuchse 34 und damit mit der Hauptstrebe 20 und der Querstrebe 21 kraftschlüssig verbunden. Die Gewindebuchse 34 ist dabei so angeordnet, dass ihr Kragen 35 direkt oberhalb der Lauffläche 30 der Rolle 29 liegt. Dadurch wird eine Belastung auf die Gewindebuchse 34 direkt über den oberen Steg 27 auf die Rolle 29 und somit auf das Scherengestell 12 übertragen.

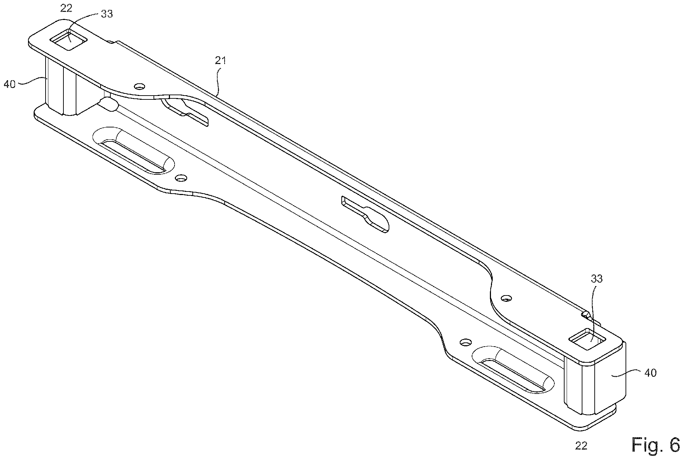

Die Figur 6 zeigt eine Isometrische Ansicht der Querstrebe 21. An den beiden Endbereichen 22 sind die Langlöcher 33 und jeweils ein das Langloch umschließender Abstandshalter 40 gezeigt. Die Querstrebe 21 bildet ähnlich zur Hauptstrebe 20 ein U-förmiges Profil aus. Die Langlöcher 33 haben einen rechteckigen Grundriss, der von den Abstandshaltern 40 U-förmig umschlossen wird. Die hier nicht gezeigten Gewindebuchsen 34 besitzen unterhalb ihres Kragens 35 einen quaderförmigen Bereich, wobei die Größe des Quaders dem Durchmesser des Langlochs 33 entspricht, sodass der quaderförmige Bereich das Langloch 33 nicht vollständig ausfüllt, aber ein Verdrehen der Gewindebuchse 34 gegenüber dem Langloch verhindert wenn die Gewindebuchse in das Langloch 33 eingeführt ist. Die Abstandshalter 40 sind zudem kleiner als die Hauptstreben 20, da die Abstandshalter 40 in die Hauptstreben 20 eingeführt werden. Die Höhe der Querstreben 21 hingegen ist größer als die der Hauptstreben 20, da die Querstreben 21 die Hauptstreben 20 umschließen.

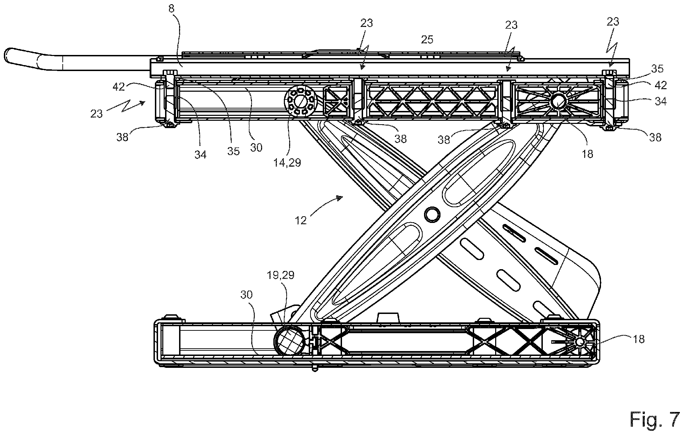

Die Figur 7 zeigt einen Schnitt durch den Fahrzeugsitzunterbau 3 entlang einer X-Z Ebene. Im oberen Rahmen 16 sind vier Verbindungsmittel 23 sichtbar angeordnet. Durch die Verbindungsmittel 23 werden in den Endbereichen 22 jeweils zwei Rahmenteile mit je einer ersten Schraube 38 und einer Buchse 34 verbunden. Eine Verstellschiene 8 liegt auf den Krägen 35 der Buchsen 34 auf und ist durch jeweils eine zweite Schraube 42 mit den Buchsen 34 verschraubt. Im Mittelbereich 25 sind zwei weitere Verbindungsmittel angeordnet. Die beiden Verbindungsmittel 23 im Mittelbereich 25 weisen keine zweiten Schrauben 42 auf. Nur auf dem Kragen 35 einer der beiden Buchsen 34 im Mittelbereich 25 liegt die Verstellschiene 8 auf. Das andere Verbindungsmittel 23 hat hingegen keinen Kontakt zur Verstellschiene 8. Die Verbindungsmittel 23 im Mittelbereich 25 verbinden somit nur Hauptstrebe 20 und Querstrebe 21, ohne die Verstellschiene zu befestigen 8. Im Bedarfsfall, beispielsweise bei hohen Belastungen können die Verbindungsmittel 23 im Mittelbereich 25 zusätzlich dazu verwendet werden die Verstellschiene 8 zu befestigen. Zwischen dem oberen Anteil 10 und dem unteren Anteil 11 ist ein Scherengestell 12 angeordnet. Hier ersichtlich sind zwei Festlager 18 und zwei Rollen 29 umfassende Loslager 19. Die Rollen 29 laufen dabei auf den Laufflächen 30 des oberen Rahmens 16 und des unteren Rahmens 17. Dabei sind die Verbindungsmittel 23 des Mittelbereichs 25 im Weg der Lauffläche 30 des oberen Rahmens 16 angeordnet. Um einen Zusammenstoß von Rolle 29 und Verbindungselement 23 zu verhindern ist ein Stopper 45 zwischen beiden, im durch die Stege 26, 27, 28 gebildeten Innenraum der Hauptstrebe 20, angeordnet. Der Stopper 45 besteht aus einzelnen Stäben, die Fachwerkartig miteinander verbunden sind. Bei einem aufeinandertreffen von Stopper 45 und Rolle 29 verformt sich der Stopper 45 und dämpft so die Bewegung der Rolle 29 bis eine maximale Verformung des Stoppers 45 erreicht ist. Danach bildet der Stopper 45 einen Anschlag für die Rolle 29.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer, in einzelnen oder in unterschiedlichen Figuren gezeigter Merkmale ergeben können.

### Bezugszeichenliste

- 1: Fahrzeugsitz
- 2: Sitzteil
- 3: Fahrzeugsitzunterbau
- 4: Sitzkissen
- 5: Rückenteil
- 6: Kopfstütze
- 7: Armlehne
- 8: Verstellschiene
- 9: Verstellschlitten
- 10: Oberer Anteil
- 11: Unterer Anteil
- 12: Scherengestell
- 13: Erster Scherenarm
- 14: Zweiter Scherenarm
- 15: Drehachse
- 16: Oberer Rahmen
- 17: Unterer Rahmen
- 18: Festlager
- 19: Loslager
- 20: Hauptstreben
- 21: Querstreben
- 22: Endebereiche
- 23: Verbindungsmittel
- 24: Ausformung
- 25: Mittelbereich
- 26: Mittelsteg
- 27: Oberer Steg
- 28: Unterer Steg
- 29: Verschiebeelement
- 30: Lauffläche
- 31: Begrenzung
- 32: Durchführung
- 33: Langloch
- 34: Buchse
- 35: Kragen
- 36: Erstes Innengewinde
- 37: Zweites Innengewinde
- 38: Erste Schraube
- 39: Erster Schraubenkopf
- 40: Abstandshalter
- 41: Zusätzliches Bauteil
- 42: Zweite Schraube
- 43: Zweiter Schraubenkopf
- 44: Zweite Durchführung
- 45: Stopper
- 46: Befestigungsschrauben
- 47: Tragebauteil
- 48: Öffnung

## Patentansprüche

1. Fahrzeugsitz (1) umfassend ein Sitzteil (2) und einen Fahrzeugsitzunterbau (3) mit einem unteren Anteil (11) und einem dazu höhenverstellbaren oberen Anteil (12), wobei der obere Anteil (12) einen Rahmen (16) zum Tragen des Sitzteils (2) aufweist oder der untere Anteil einen Rahmen (17) zur Befestigung des Fahrzeugsitzes (1) an einer Karosserie aufweist, wobei der Rahmen (16, 17) ein erstes Rahmenteil (20) und ein zweites Rahmenteil (21) umfasst, welche durch mindestens ein Verbindungsmittel (23) miteinander verbunden sind,
**dadurch gekennzeichnet, dass**
das mindestens eine Verbindungsmittel (23) ein zusätzliches Bauteil (41) am Rahmen (16, 17) befestigt.

2. Fahrzeugsitz (1) nach Anspruch 1,
**dadurch gekennzeichnet, dass**
der Rahmen (16, 17) aus mindestens vier Rahmenteilen besteht, welche rechteckförmig angeordnet sind, wobei der Rahmen (16, 17) in seiner Haupterstreckungsebene senkrecht zu einer Höhenrichtung (Z) des Sitzes (1) angeordnet ist.

3. Fahrzeugsitz (1) nach Anspruch 2,
**dadurch gekennzeichnet, dass**
der Rahmen (16, 17) zwei parallel zueinander angeordnete Hauptstreben (20) mit je einem Mittelsteg (26), einem oberen Steg (27) und einem unteren Steg (28) aufweist, wobei der Mittelsteg (26) zwischen oberen Steg (27) und untere Steg (28) angeordnet ist und die Hauptstreben (20) in einem Schnitt senkrecht zu ihrer Haupterstreckungsachse U-förmig oder Doppel-T-förmig sind, wobei sich mindestens zwei Öffnungen (48) in jedem der beiden im Schnitt U-förmigen oder Doppel-T-förmigen Hauptstreben (20) in ihren Endbereichen (22) gegenüberliegen und der Rahmen (16, 17) mindestens zwei Querstreben (21) aufweist, die die beiden Hauptstreben (20) jeweils an den Endbereichen (22) ihrer Haupterstreckungsachse miteinander verbinden, wobei die Hauptstreben (20) zum Führen mindestens eines Verschiebeelements (29), wie einer Rolle, einem Gleiter oder einem Schlitten, ausgebildet sind.

4. Fahrzeugsitz (1) nach Anspruch 3,
**dadurch gekennzeichnet, dass**
das Verbindungsmittel (23) mindestens eine Schraubverbindung umfasst, wobei der Rahmen (16, 17) mindestens eine Durchführung (32) aufweist, die durch zwei der Rahmenteile (20, 21) hindurchgeht, wobei die Durchführung (32) parallel zur Höhenrichtung (Z) des Sitzes (1) verläuft und die mindestens eine Schraubverbindung innerhalb der Durchführung (32) angeordnet ist, die die beiden Rahmenteile (20,21) kraftschlüssig miteinander verbindet.

5. Fahrzeugsitz (1) nach Anspruch 4,
**dadurch gekennzeichnet, dass**
parallel zur Höhenrichtung (Z) des Sitzes (1) mindestens eine Buchse (34) in die Durchführung (32) eingeführt ist, wobei die Buchse (34) an einem ersten Ende einen Kragen (35) aufweist, der größer als der Durchmesser der Durchführung (32) ist und die Buchse (34) ein Innengewinde (36, 37) aufweist, in das von dem, dem Kragen (35) gegenüberliegenden, zweiten Ende aus eine erste Schraube (38) eingreift, wobei die erste Schraube (38) und die Buchse (34) mindestens zwei Rahmenteile (20, 21) kraftschlüssig miteinander verbinden.

6. Fahrzeugsitz (1) nach Anspruch 4,
**dadurch gekennzeichnet, dass**
die mindestens eine Durchführung (32) ein Langloch (33) ist.

7. Fahrzeugsitz (1) nach Anspruch 5,
**dadurch gekennzeichnet, dass**
das zusätzliche Bauteil (41) mittels einer zweiten Schraube (42) von dem ersten Ende aus, das den Kragen (35) aufweist, mit der Buchse (34) verschraubt ist.

8. Fahrzeugsitz (1) nach einem der Ansprüche 4 bis 7,
**dadurch gekennzeichnet, dass**
mindestens ein Abstandshalter (40) den oberen (27) und den unteren Steg (28) beabstandet und der Abstandshalter (40) die mindestens eine Durchführung (32) zumindest teilweise umfangseitig begrenzt.

9. Fahrzeugsitz (1) nach Anspruch 8,
**dadurch gekennzeichnet, dass**
der mindestens eine Abstandshalter (40) einen Teil der Querstrebe (21) darstellt.

10. Fahrzeugsitz (1) nach Anspruch 1,
**dadurch gekennzeichnet, dass**
das zusätzliche Bauteil (41) mindestens eine Befestigung für eine oberhalb des Rahmens (16) angeordnete Sitzschale ist.

11. Fahrzeugsitz (1) nach Anspruch 1,
**dadurch gekennzeichnet, dass**
das zusätzliche Bauteil 41 mindestens eine oberhalb oder unterhalb des Rahmens 16,17 angeordnete Sitzschiene (8) oder ein Schlitten (9) ist.

12. Fahrzeugsitz (1) nach Anspruch 1,
**dadurch gekennzeichnet, dass**
das Verbindungsmittel (23) zugleich das zusätzliche Bauteil (41) befestigt und die Rahmenteile (20, 21) kraftschlüssig verbindet.
